(19) Europäisches Patentamt
European Patent Office
Office européen des brevets

(11) **EP 4 414 912 A1**

(12) **EUROPEAN PATENT APPLICATION**

(43) Date of publication:
**14.08.2024 Bulletin 2024/33**

(21) Application number: **23156220.8**

(22) Date of filing: **13.02.2023**

(51) International Patent Classification (IPC):
**G06Q 10/0631** (2023.01)     **G06Q 50/04** (2012.01)
**G06Q 10/06** (2023.01)

(52) Cooperative Patent Classification (CPC):
**G06Q 10/0631; G06Q 10/06; G06Q 50/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Naumann, Marc
  Sunnyvale, CA, 94086 (US)**
• **Bayer, Sebastian
  71101 Schoenaich (DE)**

Remarks:
Amended claims in accordance with Rule 137(2)
EPC.

(54) **JOB SCHEDULING WITH INFEASIBLE JOBS**

(57) The invention relates to a computer-implemented job scheduling method (400). From an actual scheduling instance, an augmented scheduling instance is determined that comprises a virtual system for scheduling one or more jobs that are infeasible at the actual systems. A job scheduler is applied to the augmented scheduling instance to obtain an augmented schedule. An actual schedule is determined from the augmented schedule. Jobs that are scheduled on the virtual system in the augmented schedule, are not scheduled in the actual schedule. The actual schedule is output for carrying out the scheduled jobs.

Fig. 3

Processed by Luminess, 75001 PARIS (FR)

**Description**

Technical Field

The invention relates to a computer-implemented job scheduling method; to a job scheduling system; and to a system that combines such a system with the system(s) that carry out the scheduled jobs. The invention further relates to a computer-readable medium.

Background

Job scheduling involves the automated assignment of jobs to be executed (for example, a particular manufacturing task), to a set of systems (e.g., a manufacturing robot or other robot or machine) that are able to carry them out. One important application is production scheduling, e.g., for automated manufacturing. Other applications include the scheduling of transmission of messages on a communication network; of use of shared resources such as in bike sharing and car sharing; and the assignment of tasks to robots more generally, for example in the healthcare setting.

In particular, in production scheduling, jobs can be assigned to machines with the goal of e.g. optimizing the throughput of a machine park. In many cases, there are constraints in place that restrict the solution space, e.g. by limiting a certain jobs to specific machines. In other examples, a job may depend on the previous execution of another job, a machine may have a limit on the number of jobs it can execute in a given time window, etc. The problem to find a schedule that assigns jobs to systems, while respecting any applicable constraints, may be referred to as a scheduling instance. Various scheduling algorithms are known per se that, given such a scheduling instance, can determine a schedule.

In practice, for example due to such constraints, it can be impossible to execute all jobs while satisfying all the constraints. In other words, the scheduling instance is infeasible. For instance, it can happen that no machine is currently available that is able to process a job using a certain chemical. Or, there are not enough systems available to execute all the jobs. If the scheduling instance is infeasible, a scheduling algorithm typically does not return a schedule but instead returns a message that the scheduling instance is infeasible. This can prompt manual intervention to adjust the scheduling instance such that it becomes feasible (e.g., by increasing the available time window, or by removing some jobs). Such manual intervention is however undesirable, especially in a fully automated setting, e.g., in a fully automated manufacturing system or other factory. In such a case, an infeasible scheduling instance could even lead to a production stop because no production plans can be produced.

Summary

It would be useful to perform job scheduling in such a way that infeasible scheduling instances are better dealt with.

In accordance with a first aspect of the invention, a computer-implemented job scheduling method and a corresponding system are provided, as defined by claims 1 and 10, respectively. In accordance with another aspect of the invention, a system is provided that incorporates the job scheduling system as well as the systems for carrying out the jobs that are scheduled, as defined by claim 11. In accordance with an aspect of the invention, a computer-readable medium is provided as defined by claim 15.

Various measures relate to the determination of a schedule for a scheduling instance. This scheduling instance is also referred to herein as the "actual" scheduling instance, in order to distinguish it in particular from the augmented scheduling instance that is also described in this specification.

Generally, the scheduling instance may define one or more jobs to be scheduled. Such a job may represent a particular task, e.g., a manufacturing task, to be performed on a particular object, e.g., on a particular instance of a product being manufactured. A task can have various information associated to it that is relevant for the scheduling, such as a running time and/or a set of systems able to perform the task. A scheduling instance that comprises a set of distinct tasks with respective running times is also referred to as a discrete scheduling instance.

The scheduling instance may also define one or more systems for carrying out the jobs. The systems are also referred to herein as the "actual" systems, in order to distinguish them in particular from the virtual system that is also described herein. A system can be a robot, machine, or other distinct physical device; a subsystem of a computer; or another type or resource. For example, the set of systems can comprise one or more systems of a first type; one or more systems of a second type; etc.

A job scheduler may take such a scheduling instance as input, and may determine a schedule that assigns the jobs to the systems. For example, for respective jobs, the schedule may define on which system they are executed and at which point in time. The schedule may be subject to various constraints. There may be certain time window, e.g., of at most one hour or at most 12 hours, in which the jobs are to be scheduled. Moreover, a system can typically perform at most one job at a time. Various other constraints are possible, e.g., one or more jobs may be executable only by respective subsets of the set of systems; respective systems may have respective maximum loads e.g. in terms of the number and/or type of task assigned to them, etcetera. Such constraints may be considered as being part of the scheduling instance.

Due to such constraints, the scheduling instance may be infeasible. This means that there is no possible schedule that satisfies all the constraints. Or, it can be that the actual scheduling instance is feasible, but the used job scheduler is not able to determine a feasible schedule.

To deal with such cases, the inventors envisaged to use an augmented scheduling instance. This augmented scheduling instance may be determined from the actual scheduling instance by including a virtual system. This virtual system may be suitable for scheduling one or more jobs that are infeasible at the one or more actual systems. In other words, removing these jobs from the actual scheduling instance, may make the actual scheduling instance feasible. The augmented scheduling instance may, apart from including the virtual machine, be otherwise based on, or even the same as, the actual scheduling instance, e.g., the augmented instance may have the same constraints in particular with respect to which jobs can be assigned to which actual machines.

Which jobs are scheduled on the virtual machine, is not provided as an input, but may rather be determined by applying a job scheduler to the augmented scheduling instance. This may result in an augmented schedule. The augmented schedule may assign jobs to machines of the augmented scheduling instance, in particular to the actual systems of the actual scheduling instance, and/or to the virtual machine.

It is possible that, in the augmented schedule, no jobs are assigned to the virtual machine, for example because the actual scheduling instance was in fact feasible. In other cases, interestingly, one or more jobs may be assigned to the virtual machine. As a consequence, for the set of jobs that are not assigned to the virtual machine, the augmented schedule may represent an assignment of those jobs to actual machines that respects the constraints of the actual scheduling instance. Accordingly, an actual schedule can be determined from the augmented schedule. In this actual schedule, jobs that are scheduled on the virtual system in the augmented schedule, may not be scheduled. Although this means that these jobs may not be scheduled at this point in time, it does become possible to schedule the other jobs that were assigned in the augmented schedule to an actual machine. This actual schedule may be output for carrying out the scheduled jobs.

Accordingly, the problem of not being able to determine a full schedule for the actual scheduling instance, is addressed by effectively restoring a partial solution. This is possible even when the actual scheduling instance is infeasible. The provided techniques are applicable in a wide range of settings where scheduling is applied. The scheduling can be used for manufacturing, where the jobs are manufacturing tasks carried out e.g. by a manufacturing robot or other device. For example, the provided techniques can be used to schedule jobs in a semiconductor fabrication plant. But also in other settings such as message transmission scheduling, robot task assignment, and resource sharing, the provided techniques can be used.

Interestingly, the proposed approach can be combined with existing techniques for scheduling jobs, and/or with general solvers for mathematical optimization problems, such as constraint programs. For example, an existing job scheduler can be used either by adapting the scheduling instance that is provided as input to the job scheduler and applying the job scheduler once to directly output the augmented schedule; or by applying the job scheduler twice: first to determine the set of jobs to be scheduled on the virtual system or at least the number of such jobs, and then to determine the assignment of the remaining jobs to the actual systems. This is also discussed in more detail elsewhere in this specification. Interestingly, the used techniques themselves do not need to be adapted to deal with the case where the optimization problem is infeasible. This allows a broad range of existing job schedulers and optimizers to be used in the setting where the job scheduling problem may be infeasible; in particular, it allows job schedulers and optimizers to be used that have an expressive language for representing constraints e.g. on machine-job compatibilities and the like, even when these techniques per se cannot deal with infeasibility.

Optionally, the job scheduler may be configured to perform an optimization that penalizes jobs for being scheduled to the virtual system. For example, a cost function may be defined that assigns a higher cost to assigning a given job to the virtual system than to assigning it to an actual system. For example, the job scheduler may optimize a hierarchical objective that minimizes a cost of assigning jobs to the virtual system, e.g., in combination with secondarily minimizing a cost associated to the actual scheduling instance. Using such a hierarchical objective in particular forces the scheduler to minimize the type and/or number of jobs assigned to the virtual machine. However, such strong forcing is not needed and the cost of assigning jobs to the virtual machine can also be combined with other costs that are optimized for in another way, e.g., by optimizing for a sum of these costs.

With such an optimization, the job scheduler may effectively try to send many jobs to the actual machines, because it is penalized based on the number of jobs that are scheduled on the virtual machine. As a consequence, the jobs that remain on the virtual system, may be those jobs that render the actual scheduling instance infeasible. Interestingly, in the augmented scheduling instance such jobs do not cause the job scheduler to fail, because they are now "processed" by the virtual system. Still, the job scheduler is encouraged to schedule as many jobs as possible on the actual systems, thereby allowing as many jobs as possible to be carried out.

Optionally, the costs associated with assigning different jobs to the virtual system, can differ from each other. By defining these costs differently, the optimizer may make a suitable choice of which jobs to assign to the virtual machine, and thus which jobs to effectively exclude from current execution. For example, the cost can be based on a priority of the jobs and/or an amount of time the jobs have been waiting for execution.

Optionally, the job scheduler may be applied to the augmented scheduling instance after a failure to determine a schedule for the actual scheduling instance. Thus, a job scheduler may first be applied to the actual scheduling instance. If this does not result in a schedule, e.g., because the actual scheduling instance is infeasible or the job scheduler is for another reason unable to find a feasible schedule; the augmented schedule may be determined and used as described herein. However, it is also possible to directly apply the job scheduler to the augmented scheduling instance without first applying it to the actual scheduling instance. Indeed, if a feasible solution to the actual scheduling instance exists, then the job scheduler can also find this solution by solving the augmented scheduling instance. Either of the two options can be more efficient depending on the application at hand -- in particular, depending on the probability that the actual scheduling instance is feasible and the relative costs of applying the job scheduler to the actual and augmented scheduling instances.

Optionally, a re-scheduling may be performed before the end of the time window of a determined actual schedule. This re-scheduling may also re-schedule tasks that were scheduled during the time window but that were not yet started. For example, the re-scheduling may be performed periodically and/or may be triggered by the receipt of one or more new jobs to be scheduled and/or a change in one or more constraints applicable to the job scheduling. Thus, the actual schedule does not need to be executed in full, and if a better schedule is possible, it is possible to switch to this schedule.

Optionally, a job queue may be maintained, with jobs from that job queue being scheduled repeatedly, e.g., periodically or triggered as described above. When repeatedly performing the scheduling, jobs that were not scheduled in a previous actual schedule, in particular because they were assigned to the virtual system, may be kept in the job queue and used as input to the next scheduling. In this next scheduling, one or more of these jobs may be scheduled; for example, because a constraint that caused the job to previously remain unscheduled may no longer be applicable, or because the job(s) have received a higher priority for being older. However, it is also possible that one or more of these jobs remain unscheduled also after this rescheduling, e.g., because a constraint that makes it impossible to schedule a job, still applies. If a job is unscheduled for a certain amount of time, an alert can be raised, e.g., to a user.

Optionally, the job scheduler may apply a mathematical optimizer. To this end, the augmented scheduling instance may be represented as an instance of a type of mathematical optimization problem supported by the optimizer. This type of problem can be a constraint program, a mixed integer program, or a local search program, for example. It is known per se to represent scheduling problems in terms of these types of problems. Also augmenting the scheduling problem using a virtual system as proposed herein is then possible. Various optimizers can be used that are available in the market per se, e.g., CPLEX and in particular CPLEX CPO (e.g., version 20.1.0); LocalSolver (e.g., version 11.5); or Gurobi (e.g., version 10.0). An advantage of using a mathematical solver for a general class of optimization problems is that this provides increased flexibility to define constraints and/or optimization objectives on the job scheduling problem. Interestingly, using the provided techniques, this increased flexibility can be combined with a suitable handling of infeasible job scheduling problems.

Optionally, the systems for carrying out the jobs can be physical machines, such as robots, autonomous vehicles, etcetera. The systems can also be computer systems, e.g., cloud computing systems, and the like, e.g., for scheduling jobs such as MapReduce jobs on the cloud. In one particular example, the system in which the jobs are carried out can be a semiconductor fabrication plant. This is a particularly preferred embodiment since such a plant typically involves jobs that need to be scheduled dynamically and that can be carried out autonomously. Another example is where the systems that carry out the jobs are telecommunications, ethernet, or other networking equipment, such as routers, switches, base transceiver stations and/or multiplexers. In such a case, one or more jobs can represent communication to be transmitted over the network.

Optionally, the jobs are scheduled and carried out autonomously, e.g., a job may be initiated without any human intervention. However, this is not necessary. For example, the schedule may be confirmed by a human before automated execution. Or, one, more, or all of the jobs may be scheduled for execution by a human, e.g., the jobs may be for a manual manufacturing process. Regardless of whether the jobs are carried out autonomously and/or automatically, an alert may be raised, for example to a human, if not all jobs are scheduled in the actual schedule. Interestingly, however, also in this case, one or more jobs can still be scheduled in the actual schedule and carried out, without a need to respond to the raised alert.

It will be appreciated by those skilled in the art that two or more of the above-mentioned embodiments, implementations, and/or optional aspects of the invention may be combined in any way deemed useful.

Modifications and variations of any system and/or any computer readable medium, which correspond to the described modifications and variations of a corresponding computer-implemented method, can be carried out by a person skilled in the art on the basis of the present description.

Brief Description

These and other aspects of the invention will be apparent from and elucidated further with reference to the embodiments described by way of example in the following description and with reference to the accompanying drawings, in which:

Fig. 1 shows a job scheduling system;
Fig. 2 shows a system for executing jobs;
Fig. 3 shows a detailed example of how to schedule jobs;
Fig. 4 shows a computer-implemented job scheduling method;
Fig. 5 shows a computer-readable medium comprising data.

It should be noted that the figures are purely diagrammatic and not drawn to scale. In the figures, elements which correspond to elements already described may have the same reference numerals.

Detailed Description

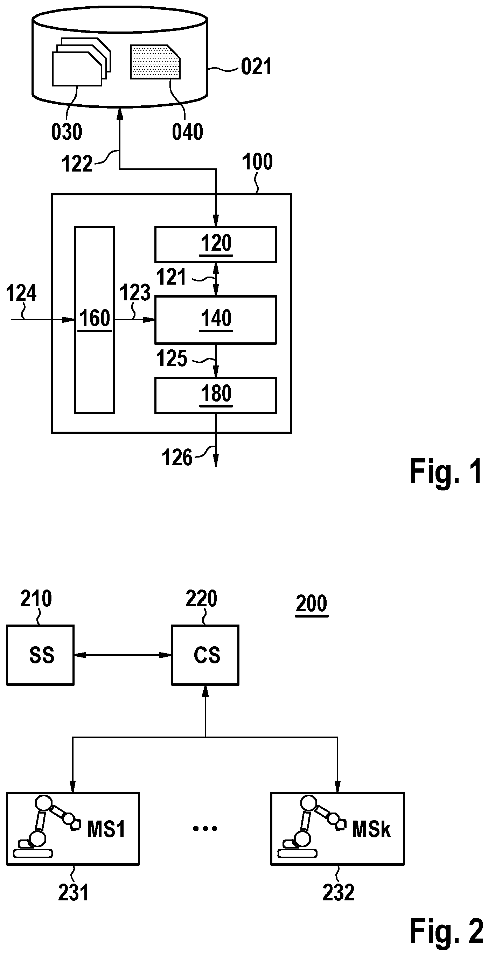

**Fig. 1** shows a job scheduling system 100. The system 100 may comprise a data interface 120. Data interface 120 may be for accessing data 030 representing an actual scheduling instance. The data 030 may represent one or more jobs to be scheduled. For example, there can be multiple jobs to be scheduled, e.g., at least 20, at least 250, or at least 1000. The data 030 may further represent one or more actual systems for carrying out the jobs. For example, the number of systems may be at most or at least 10, or at most or at least 50. Data interface 120 may also be for accessing the actual schedule 040 for carrying out the jobs 030 that the system is configured to determine.

For example, as also illustrated in Fig. 1, the data interface 120 may be constituted by a data storage interface which may access the data 030, 040 from a data storage 021. For example, the data storage interface 120 may be a memory interface or a persistent storage interface, e.g., a hard disk or an SSD interface, but also a personal, local or wide area network interface such as a Bluetooth, Zigbee or Wi-Fi interface or an ethernet or fibreoptic interface. The data storage 021 may be an internal data storage of the system 100, such as a hard drive or SSD, but also an external data storage, e.g., a network-accessible data storage. In some embodiments, respective data may each be accessed from a different data storage, e.g., via a different subsystem of the data storage interface 120. Each subsystem may be of a type as is described above for data storage interface 120.

System 100 may further comprise an input interface 160 for accessing job information data 124. System 100 may be configured to determine the scheduling instance 030 based on the job information data 124. In particular, the job information data 124 may represent progress information about one or more jobs that are being executed and/or data about one or more jobs that are to be executed in the future. This input interface 160 can take on various forms.

In an embodiment, the input interface 160 may comprise a communication interface 160 configured for communication with one or more other systems that directly or indirectly execute the jobs, e.g., a controller system or a manufacturing system as discussed with respect to Fig. 2. Communication interface 160 may internally communicate with processor subsystem 140 via data communication 123. Communication interface 160 may be arranged for direct communication with the other system(s), e.g., using USB, IEEE 1394, or similar interfaces. Communication interface 160 may also communicate over a computer network, for example, a wireless personal area network, an internet, an intranet, a LAN, a WLAN, etc. For instance, communication interface 160 may comprise a connector, e.g., a wireless connector, an Ethernet connector, a Wi-Fi, 4G or 4G antenna, a ZigBee chip, etc., as appropriate for the computer network. Communication interface 160 may also be an internal communication interface, e.g., a bus, an API, a storage interface, etc.

In an embodiment (not shown), the input interface 160 comprises a data interface, e.g., the data interface may be as described for data interface 120 or may be implemented by that data interface.

In an embodiment (not shown), the input interface 160 may comprise a sensor interface for obtaining sensor data acquired by one or more sensors measuring sensor data indicative of job progress. The sensor(s) can but do not need to be part of the system 100. The sensor(s) may have any suitable form, such as an image sensor, a lidar sensor, a radar sensor, a pressure sensor, a temperature sensor, etc. In some embodiments, the sensor data may comprise sensor measurements of different physical quantities in that it may be obtained from two or more different sensors sensing different physical quantities. The sensor data interface may have any suitable form corresponding in type to the type of sensor, including but not limited to a low-level communication interface, e.g., based on I2C or SPI data communication.

The system 100 may further comprise a processor subsystem 140 which may be configured to, during operation of the system 100, determine an actual schedule 040 for the jobs 030. In particular, processor subsystem 140 may be configured to determine an augmented scheduling instance from the actual scheduling instance 030. The augmented scheduling instance may comprise a virtual system for scheduling one or more jobs that are infeasible at the one or more actual systems. Processor subsystem 140 may be configured to apply a job scheduler to the augmented scheduling instance to obtain an augmented schedule. Processor subsystem 140 may be configured to determine an actual schedule 040 from the augmented schedule. Jobs that are scheduled on the virtual system in the augmented schedule, may not be scheduled in the actual schedule 040. The system 100 may further comprise an output interface 180 for outputting data 126 representing the actual schedule for carrying out the scheduled jobs. The output interface 180 may comprise data interface and/or a communication interface as described for the input interface 160. As shown in the figure, in an embodiment, the output interface 180 may comprises an actuator interface for providing control data 126 to an actuator (not shown). Such control data 126 may be generated by the processor subsystem 140 to control one or more actuators to perform one or more of the scheduled jobs. The actuator may be part of system 100. For example, the actuator may be an electric, hydraulic, pneumatic, thermal, magnetic and/or mechanical actuator. Specific yet non-limiting examples include electrical motors, electroactive polymers, hydraulic cylinders, piezoelectric actuators, pneumatic actuators, servomechanisms, solenoids, stepper motors, etc.

In general, each system described in this specification, including but not limited to the system 100 of Fig. 1 and the systems shown in Fig. 2, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers. In some embodiments, the system 100 may be part of vehicle, robot or similar physical entity, and/or may be represent a control system configured to control the physical entity.

**Fig. 2** shows a system 200 for carrying out one or more jobs. The system may comprise a job scheduling system **SS,** 210, e.g., based on job scheduling system 100 of Fig. 1.

The job scheduling system **SS** may be configured to determine an actual schedule for a set of jobs that are to be carried out by one or more actual systems **MS1,** 231 to **MSk,** 232 of the system 200. In particular, in this example, the systems **MSi** are physical machines, e.g., robots, manufacturing devices, etc.

The system 200 may further comprise a controller system **CS,** 220, configured to control the actual systems **MSi** to perform the jobs according to the determined schedule. The respective systems can be implemented as separate devices, e.g., using the hardware configuration of system 100 of Fig. 1; but it is also possible to combine one or more of the systems of Fig. 2 into a single device. In particular, controller **CS** may be combined with the scheduling system **SS** and/or one or more of the actual systems **MSi** into a single device. The system 200 can be an autonomous system in the sense that the system may be configured to schedule and execute a job without human interaction between. In this setting in particular, it is important to limit the impact of infeasible schedules, e.g., of unsatisfiable constraints for certain jobs.

As a specific example, system 200 can be a semiconductor fabrication plant, or other type of manufacturing system. In such a system, in practice there are often multiple machines **MSi** with the same or similar capabilities. Jobs waiting to be processed may need to be assigned to the machines, e.g., periodically or as a new job comes in. In such an example, the ordering of jobs on the machines can have a significant impact of the performance of the machines, e.g. due to cleaning steps between the jobs. At the same time, various constraints can restrict which jobs can be performed by which machines, e.g., can indicate machine-job compatibilities. For example, in semiconductor manufacturing, a constraint may dedicate jobs using certain chemicals to a limited set of machines.

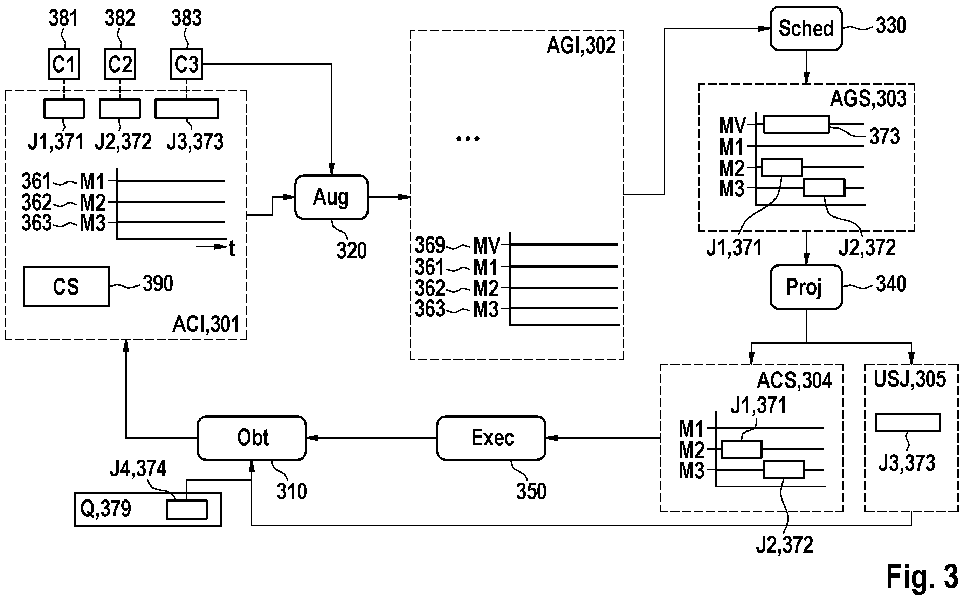

**Fig. 3** shows a detailed, yet non-limiting, example of how to schedule jobs.

The figure shows an actual scheduling instance **ACI,** 301. The actual scheduling instance **ACI** may comprise one or more jobs to be scheduled. As an illustrative example, three jobs are shown: job **J1,** 371; job **J2,** 372; and job **J3;** 373. The jobs can have various information associated to them. For example, a job can have a certain type. The type of job may imply a constraint on which systems the job can be scheduled on. As another example, the job can have a certain processing time. For example, a job can have a processing time of at least or at most 5 minutes or at least or at most 120 minutes.

Typically, a system can only perform one job at a time, meaning that if a job **Ji** with a processing time $t_i$ is scheduled at a certain system at a certain time $t_0$, no other job can be scheduled on the system until time $t_0 + t_i$. Such a type of scheduling instance where respective jobs are assigned to respective systems at respective times, is also referred to as a discrete scheduling instance.

The actual scheduling instance **ACI** may also comprise one or more actual systems, e.g., machines, for carrying out the jobs. The figure by way of example shows three actual systems **M1,** 361; **M2,** 362; and **M3,** 363. The systems are illustrated as lines on a horizontal time axis; a schedule may correspond to an assignment of jobs **Ji** to systems **Mj** at particular time intervals on the axis.

The scheduling instance can optionally have a given time window (illustrated by the time axis in the figure) in which the jobs are to be scheduled. For example, the time window can be at most or at least one hour, at most or at least 10 hours, or at most or at least two days. The scheduling instance **ACI** may demand that scheduled jobs start, and optionally also finish, before the end of the time window.

In general, various techniques are known by which scheduling instance **ACI** can be represented, and by which the instance can be input to a solver in order to determine a schedule. For example, a scheduling instance described herein may be represented as a constraint program, as a mixed integer program, or as a local search program. A concrete example is now given of a representation of a scheduling instance as a constraint program, in particular, for use with the CPLEX CPO optimizer. In this example, the makespan of a parallel-machines scheduling problem is minimized:

$$
\begin{aligned}
\text{minimize} \quad & \textit{max}\text{endOf}(o_j)\, j \in N \\
\text{subject to} \quad & \text{alternative } (o_j, \{a_{ij} \mid i \in M_j\}) && \forall j \in N, \\
& \text{noOverlap } (\{a_{ij} \mid j \in N \wedge i \in M_j\}) && \forall i \in M, \\
& \text{interval } o_j && \forall j \in N, \\
& \text{interval } a_{ij}, \text{ optional, size} = p_{ij} && \forall j \in N, i \in M_j
\end{aligned}
$$

In this example, the set $N = \{1,...,n\}$ represents the set of jobs **Ji** to be processed. The set $M = \{1, ..., m\}$ represents the set of available systems **Mi.** The set $M_j \subseteq M$ is the set of systems compatible with job $j \in N$. The value $p_{i,j}$ is the processing time of job $j \in N$ on machine $i \in M$ (which can differ per machine).

In this example, the fourth line introduces respective interval variables $o_j$ for the jobs **Jj.** This variable may represent a time interval at which the job is executed in the schedule. The fifth line introduces one optional alternative $a_{ij}$ per compatible machine, representing the assignment of job $j$ to machine $i$. The second line represents that, for each job $j$, exactly one machine assignment $a_{ij}$ can be made. The third line represents that the respective jobs on a machine do not overlap. The first line represents the cost associated to the actual scheduling instance, in this case the makespan, in other words, the maximum end time.

The figure further shows one or more constraints **CS,** 390 of the actual scheduling instance **ACI**. The constraints **CS** may represent technical requirements on the systems that are configured to execute the jobs. The constraints can restrict the assignment of jobs **Ji** to systems **Mj** in various ways. For example, one or more constraints may represent system-job compatibilities in that they restrict which jobs **Ji** can be assigned to which systems **Mj.** As another example, one or more constraints may restrict the jobs that are assigned to a specific system **Mj** in combination, e.g., by setting a maximum number of jobs and/or a maximum number of jobs of a certain type, etc. It is also possible to constrain the assignment of jobs **Ji** to systems **Mj** globally, e.g., by imposing a maximum amount of systems to be active at the same time; by imposing a maximum amount of energy that the systems in total can consume at any given time; by restricting the number of concurrent tasks that need access to a resource with limited availability, such as a reticle; by avoiding concurrent execution of incompatible tasks, e.g., tasks that use incompatible chemicals; etcetera.

The constraints **CS** can vary in time and can even be updated automatically based on received status information. For example, it may be detected a specific system **Mj** is broken. This can cause the actual scheduling instance **ACI** to become infeasible, e.g., if one or more jobs can only be carried out using this machine. As an example, the above mathematical model may become infeasible as an optimization problem when $M_j = \varnothing$ for a job $j \in N,$ e.g., no machine is currently available that can process job $j$.

The techniques provided herein allow to deal with this system being broken, and allow to later schedule tasks that cannot be scheduled at the moment due to the breakage; for example, when the system **Mj** becomes available again or by letting other machines execute the jobs if this is possible.

To deal with the possibility of actual scheduling instance **ACI** being infeasible or hard to solve, an augmentation operation **Aug,** 320 may be performed. The augmentation **Aug** may determine an augmented scheduling instance **AGI,** 302, from the actual scheduling instance **ACI.** As illustrated in the figure, the augmented scheduling instance **ACI** may comprise a virtual system **MV,** 369. The virtual system **MV** may be for scheduling one or more jobs that are infeasible at the one or more actual systems **Mi.** System **MV** may be "virtual" in the sense that it does not correspond to a physical entity and jobs are not actually executed on it, but instead jobs scheduled on the virtual system **MV** may be excluded from execution when scheduled on it. The virtual system **MV** is typically defined in such a way that it can process all jobs, and is free from all constraints associated with normal machines. As illustrated in the figure, apart from additionally including the virtual system **MV,** the augmented scheduling instance **AGI** can in general be the same as the actual scheduling instance **ACI.**

Interestingly, the augmented scheduling instance **AGI** may be defined in such a way that it is feasible regardless of the feasibility of the actual scheduling instance **ACI.** That is because the augmented scheduling instance **AGI** may allow all tasks to be scheduled on the virtual system. Jobs assigned to the virtual system may not be constrained to be non-overlapping. Or, alternatively, multiple virtual systems may be defined such that respective jobs can be assigned in a non-overlapping way to the respective virtual systems when needed. Accordingly, it may be guaranteed that a job scheduler does not terminate on the augmented scheduling instance **AGI** because of conflicting constraints, which is especially beneficial in case the schedule is used in an automated and/or unsupervised system, such as a factory.

As a detailed example, the parallel-machines scheduling problem illustrated above can be augmented by adding a virtual system **MV** as follows:

minimize

$$\text{lex}\left(\sum_{j \in N} \text{presenceOf}\left(\tilde{a}_j\right), \max_{j \in N} \text{endOf}\left(o_j\right)\right)$$

subject to

$$\begin{array}{lr}
\text{alternative}\left(o_j, \{a_{ij} \mid i \in M_j\} \cup \{\tilde{a}_j\}\right) & \forall j \in N, \\
\text{noOverlap}\left(\{a_{ij} \mid j \in N \wedge i \in M_j\}\right) & \forall i \in M, \\
\text{interval } o_j & \forall j \in N, \\
\text{interval } a_{ij}, \text{ optional, size} = p_{ij} & \forall j \in N, i \in M_j, \\
\text{interval } \tilde{a}_j, \text{ optional} & \forall j \in N
\end{array}$$

In this example, the sixth line introduces an optional alternative for respective job **Ji** $j \in N$ on the virtual system **MV.** This alternative is added to the set of possible alternatives in the second line. The first line replaces the original objective associated with the actual scheduling instance **ACI** by a new objective that primarily minimizes a cost of assigning jobs to the virtual system, in this case representing the number of jobs assigned to the virtual machine; and secondarily optimizes the original objective. This is implemented in this example by a lexicographic objective that first minimizes the number of present intervals on the virtual machine, and then minimizes the makespan.

It may be remarked that the augmented scheduling instance **AGI** shown in the above example is always feasible, e.g., also when $M_j = \varnothing$ for a job $j \in N$. Namely, the assignment of all jobs to the virtual machine **MV** represents a feasible, but typically suboptimal, solution to the scheduling problem **AGI.**

Although the above example minimizes the number of jobs per se that are scheduled on the virtual system by using a lexicographic objective (also sometimes referred to as a hierarchical objective) that counts the number of jobs assigned to the virtual system, it is also possible to penalize jobs for being scheduled to the virtual system in other ways. In particular, the cost of assigning jobs to the virtual system may be weighted, where the costs of assigning respective jobs to the virtual system may differ. This allows to prioritize the scheduling of one or more jobs over one or more others in case they cannot all be scheduled. This is illustrated in the figure by showing respective costs **C1,** 381; **C2,** 382; **C3;** 383 of assigning the respective jobs **Ji** to the virtual system. It is also not necessary to use a hierarchical objective, e.g., the cost of assigning jobs to the virtual system and thereby leaving them unscheduled, can be weighed against the objective of the actual scheduling instance, e.g., the end time.

A scheduling operation **Sched,** 330 is shown that applies a job scheduler to the augmented scheduling instance **AGI** to obtain an augmented schedule **AGS,** 303. In case the actual scheduling instance **AGI** is infeasible, the augmented schedule may provide a partial solution to the actual scheduling instance **ACI** in the sense that it can schedule zero or more jobs on the actual systems **Mi** while leaving one or more other jobs unscheduled on the actual systems **Mi** by instead scheduling them on the virtual system **MV.** Accordingly, including the augmented scheduling instance **AGI** essentially allows to resolve the infeasibility issue and in such a case restore a partial solution. For example, the figure illustrates the case where, in the augmented schedule **AGS,** jobs **J1** and **J2** are scheduled on actual systems **M2** and **M1,** respectively, whereas job **J3** is scheduled on the virtual system **MV.**

Various existing job schedulers or mathematical optimizers can be used. The scheduling is typically implemented as an optimization. As the skilled person is aware, such an optimization may be heuristic and/or may arrive at a local optimum. Various mathematical optimizers can be used that support hierarchical objectives per se. This makes it convenient to use such a hierarchical objective to primarily minimize a cost of assigning jobs to the virtual system. For example, the solver can be CPLEX, CPLEX CPO, Gurobi, or LocalSolver. However, even if the job scheduler or optimizer used does not support hierarchical objectives, it is possible to determine the augmented schedule **AGS.** Namely, in this case, the job scheduler or optimizer may be applied to the augmented scheduling instance by first applying it to a scheduling instance in which just the cost of assigning jobs to the virtual system is minimized, leading to a minimal cost $C$; and then to a feasible scheduling instance determined based on the outcome of the first scheduling. For example, the feasible instance may have the cost of assigning jobs to the virtual system fixed at value $C$, or may have the jobs that were assigned to the virtual system be removed.

The figure further shows a projection operation **Proj,** 340. The projection operation **Proj** may determine an actual schedule **ACS,** 304 from the augmented schedule **AGS.** Jobs that are scheduled on the virtual system **MV** in the augmented schedule **AGS,** may not be scheduled in the actual schedule **ACS.** Otherwise, the actual schedule can be the same as the augmented schedule. For example, in the example illustrated in the figure, jobs **J1** and **J2** were assigned to actual systems in the augmented schedule **AGS,** and are scheduled in the same way in the actual schedule **ACS.** Job **J3** was assigned to the virtual system **MV** and is not scheduled in the actual schedule **ACS.**

The projection operation **Proj** may output a list of unscheduled jobs **USJ,** 305, in this example including job **J3.** Unscheduled jobs **USJ** may be re-added to a queue **Q,** 379 of jobs. These jobs may for example be included in the actual scheduling instance **ACI** the next time scheduling is performed. Accordingly, the jobs **USJ** may be processed at the next optimization run, and re-planned by the solver until the conflicting situation is resolved or until a human operator can investigate the issue in more detail. For example, jobs $j$ with $M_j = \varnothing$ in the above example may be added again to scheduling instance **ACI** the next time scheduling is performed, in which case a compatible machine for the job may be available.

Although not shown in the figure, it is possible to apply the scheduler **Sched** first to the actual scheduling instance **ACI** to attempt to determine the actual schedule **ACS** directly, and to only augment **Aug** and apply the scheduler to the augmented scheduling instance **AGI** if the actual scheduling instance **ACI** turns out to be infeasible or the scheduler is not able to determine the actual schedule for the actual scheduling instance for another reason. First trying to schedule the actual scheduling instance is in many cases more efficient than directly applying the scheduling **Sched** on the augmented scheduling instance **ACI,** especially if it is relatively rare that the actual scheduling instance **ACI** is infeasible. In other cases, e.g., if infeasibility is common and/or solving the augmented scheduling instance **AGI** has computational cost comparable to solving the actual scheduling instance **ACI,** it can also be beneficial to skip solving the actual scheduling instance **ACI,** however.

Actual schedule **ACS** may be executed in an execution operation **Exec,** 350. This is discussed in more detail with respect to Fig. 2. The execution operation **Exec** may provide execution information that may later be used to determine which jobs have been started and which jobs still need to be planned.

In particular, the actual scheduling instance **ACI** for which a schedules is determined, may be obtained in an obtaining operation **Obt,** 310. The obtaining operation **Obt** can be performed periodically and/or as triggered by an update, e.g., by arrival of a new job **J4,** 374 to be scheduled, by a change in constraints **CS,** e.g., in availability of one or more systems **Mi,** etc. Periodic rescheduling can have a period for example of at most or at least 10 minutes, or at most or at least 30 minutes.

The obtaining operation **Obt** may include in the set of jobs to be scheduled one or more newly arrived job(s) **J4,** and/or one or more unscheduled jobs **USJ** from the previous schedule. In many cases, rescheduling may be performed before the previous schedule has been completely executed, in particular before one or more previously scheduled tasks were even started. For example, periodic rescheduling may take place at least two, at least five, or at least ten times during the scheduling time window. In such a case, also scheduled but unstarted jobs from the previous schedule **ACS** may be included in the set of jobs to be scheduled. This way, the execution of the jobs can be performed in a more optimized way as compared to fully executing the previously determined schedule until the end of the time window.

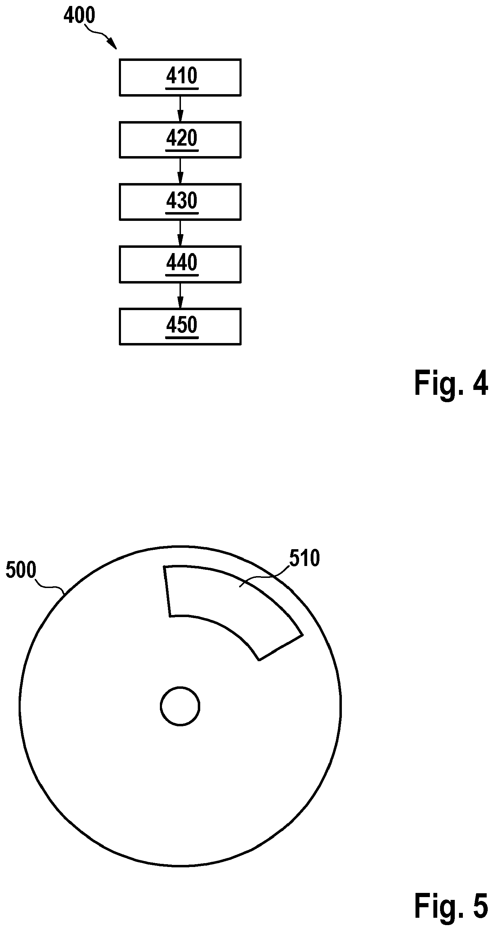

**Fig. 4** shows a block-diagram of computer-implemented job scheduling method 400. The method 400 may correspond to an operation of the system 100 of Fig. 1. However, this is not a limitation, in that the method 400 may also be performed using another system, apparatus or device.

The method 400 may comprise, in an operation titled "OBTAIN JOBS", obtaining 410 data representing an actual scheduling instance. The actual scheduling instance may comprise one or more jobs to be scheduled and one or more actual systems for carrying out the jobs.

The method 400 may comprise, in an operation titled "ADD VIRTUAL SYSTEM", determining 420 an augmented scheduling instance from the actual scheduling instance. The augmented scheduling instance may comprise a virtual system for scheduling one or more jobs that are infeasible at the one or more actual systems.

The method 400 may comprise, in an operation titled "SCHEDULE", applying 430 a job scheduler to the augmented scheduling instance to obtain an augmented schedule.

The method 400 may comprise, in an operation titled "PROJECT", determining 440 an actual schedule from the augmented schedule. Jobs that are scheduled on the virtual system in the augmented schedule, may not be scheduled in the actual schedule.

The method 400 may comprise, in an operation titled "OUTPUT", outputting 450 data representing the actual schedule for carrying out the scheduled jobs.

It will be appreciated that, in general, the operations of method 400 of Fig. 4 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 5,** instructions for the computer, e.g., executable code, may be stored on a computer readable medium 500, e.g., in the form of a series 510 of machine-readable physical marks and/or as a series of elements having different electrical, e.g., magnetic, or optical properties or values. The medium 500 may be transitory or non-transitory. Examples of computer readable mediums include memory devices, optical storage devices, integrated circuits, servers, online software, etc. Fig. 5 shows an optical disc 500. Alternatively, the computer readable medium 500 may comprise data 510 representing an actual schedule for carrying out scheduled jobs determined according to a computer-implemented method provided herein.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. A computer-implemented job scheduling method (400), comprising:

   - obtaining (410) data representing an actual scheduling instance, wherein the actual scheduling instance comprises one or more jobs to be scheduled and one or more actual systems for carrying out the jobs;
   - determining (420) an augmented scheduling instance from the actual scheduling instance, wherein the augmented scheduling instance comprises a virtual system for scheduling one or more jobs that are infeasible at the one or more actual systems;
   - applying (430) a job scheduler to the augmented scheduling instance to obtain an augmented schedule;
   - determining (440) an actual schedule from the augmented schedule, wherein jobs that are scheduled on the virtual system in the augmented schedule, are not scheduled in the actual schedule;
   - outputting (450) data representing the actual schedule for carrying out the scheduled jobs.

2. The method (400) of claim 1, wherein the job scheduler is configured to perform an optimization that penalizes jobs for being scheduled to the virtual system.

3. The method (400) of claim 2, wherein the job scheduler is configured to optimize a hierarchical objective that primarily minimizes a cost of assigning jobs to the virtual system and secondarily minimizes a cost associated to the actual scheduling instance.

4. The method (400) of claim 3, wherein a cost of assigning a first job to the virtual system is different from a cost of assigning a second job to the virtual system.

5. The method (400) of any preceding claim, wherein the job scheduler is applied to the augmented scheduling instance after a failure to determine a schedule for the actual scheduling instance.

6. The method (400) of any preceding claim, wherein the actual schedule has a time window, and wherein the method further comprises, before the end of the time window, performing a re-scheduling of at least one unstarted job from the actual schedule.

7. The method (400) of any preceding claim, comprising maintaining a job queue and repeatedly scheduling jobs of the job queue; wherein jobs that are not scheduled in the actual schedule are kept in the job queue for a next scheduling.

**8.** The method (400) of any preceding claim, wherein applying the job scheduler comprises representing the augmented scheduling instance as mathematical optimization problem of a given type, and applying a solver for the given type of mathematical optimization problem.

**9.** The method (400) of any preceding claim, wherein the type of mathematical optimization problems is a constraint program, a mixed integer program, or a local search program.

**10.** A job scheduling system (100), comprising:

- a data interface (120) for accessing data (030) representing an actual scheduling instance, wherein the actual scheduling instance comprises one or more jobs to be scheduled and one or more actual systems for carrying out the jobs;
- a processor subsystem (140) configured to:
- determine an augmented scheduling instance from the actual scheduling instance, wherein the augmented scheduling instance comprises a virtual system for scheduling one or more jobs that are infeasible at the one or more actual systems;
- apply a job scheduler to the augmented scheduling instance to obtain an augmented schedule;
- determine an actual schedule from the augmented schedule,

wherein jobs that are scheduled on the virtual system in the augmented schedule, are not scheduled in the actual schedule;

- an output interface (180) for outputting data (040) representing the actual schedule for carrying out the scheduled jobs.

**11.** A system (200) comprising:

- a job scheduling system (210) for scheduling one or more jobs according to claim 10; and
- the one or more systems (231, 232) for carrying out the one or more jobs.

**12.** The system (200) of claim 11, wherein the systems for carrying out the jobs are physical machines.

**13.** The system (200) of claim 12, wherein the system is a semiconductor fabrication plant.

**14.** The system (200) of any one of claims 11-13, wherein the system is configured to autonomously schedule and carry out the jobs.

**15.** A transitory or non-transitory computer-readable medium (600) comprising data (610) representing:

- instructions which, when executed by a processor system, cause the processor system to perform the computer-implemented method according to any one of claims 1-13; and/or
- data representing an actual schedule for carrying out scheduled jobs determined according to the computer-implemented method of any one of claims 1-10.

**Amended claims in accordance with Rule 137(2) EPC.**

**1.** A computer-implemented job scheduling method (400), comprising:

- obtaining (410) data representing an actual scheduling instance, wherein the actual scheduling instance comprises one or more jobs to be scheduled and one or more actual systems for carrying out the jobs;
- determining (420) an augmented scheduling instance from the actual scheduling instance,

wherein the augmented scheduling instance comprises a virtual system for scheduling one or more jobs that are infeasible at the one or more actual systems,
wherein the virtual system (MV) does not correspond to a physical entity and jobs are not actually executed on it and jobs scheduled on the virtual system (MV) are excluded from execution when scheduled on it;

- applying (430) a job scheduler to the augmented scheduling instance to obtain an augmented schedule;
- determining (440) an actual schedule from the augmented schedule, wherein jobs that are scheduled on the virtual system in the augmented schedule, are not scheduled in the actual schedule;
- outputting (450) data representing the actual schedule for carrying out the scheduled jobs.

2. The method (400) of claim 1, wherein the job scheduler is configured to perform an optimization that penalizes jobs for being scheduled to the virtual system.

3. The method (400) of claim 2, wherein the job scheduler is configured to optimize a hierarchical objective that primarily minimizes a cost of assigning jobs to the virtual system and secondarily minimizes a cost associated to the actual scheduling instance.

4. The method (400) of claim 3, wherein a cost of assigning a first job to the virtual system is different from a cost of assigning a second job to the virtual system.

5. The method (400) of any preceding claim, wherein the job scheduler is applied to the augmented scheduling instance after a failure to determine a schedule for the actual scheduling instance.

6. The method (400) of any preceding claim, wherein the actual schedule has a time window, and wherein the method further comprises, before the end of the time window, performing a re-scheduling of at least one unstarted job from the actual schedule.

7. The method (400) of any preceding claim, comprising maintaining a job queue and repeatedly scheduling jobs of the job queue; wherein jobs that are not scheduled in the actual schedule are kept in the job queue for a next scheduling.

8. The method (400) of any preceding claim, wherein applying the job scheduler comprises representing the augmented scheduling instance as mathematical optimization problem of a given type, and applying a solver for the given type of mathematical optimization problem.

9. The method (400) of any preceding claim, wherein the type of mathematical optimization problems is a constraint program, a mixed integer program, or a local search program.

10. A job scheduling system (100), comprising:

    - a data interface (120) for accessing data (030) representing an actual scheduling instance, wherein the actual scheduling instance comprises one or more jobs to be scheduled and one or more actual systems for carrying out the jobs;
    - a processor subsystem (140) configured to:
    - determine an augmented scheduling instance from the actual scheduling instance, wherein the augmented scheduling instance comprises a virtual system for scheduling one or more jobs that are infeasible at the one or more actual systems, wherein the virtual system (MV) does not correspond to a physical entity and jobs are not actually executed on it and jobs scheduled on the virtual system (MV) are excluded from execution when scheduled on it;
    - apply a job scheduler to the augmented scheduling instance to obtain an augmented schedule;
    - determine an actual schedule from the augmented schedule, wherein jobs that are scheduled on the virtual system in the augmented schedule, are not scheduled in the actual schedule;
    - an output interface (180) for outputting data (040) representing the actual schedule for carrying out the scheduled jobs.

11. A system (200) comprising:

    - a job scheduling system (210) for scheduling one or more jobs according to claim 10; and
    - the one or more systems (231, 232) for carrying out the one or more jobs.

12. The system (200) of claim 11, wherein the systems for carrying out the jobs are physical machines.

13. The system (200) of claim 12, wherein the system is a semiconductor fabrication plant.

14. The system (200) of any one of claims 11-13, wherein the system is configured to autonomously schedule and carry out the jobs.

15. A transitory or non-transitory computer-readable medium (600) comprising data (610) representing:

- instructions which, when executed by a processor system, cause the processor system to perform the computer-implemented method according to any one of claims 1-13; and/or
- data representing an actual schedule for carrying out scheduled jobs determined according to the computer-implemented method of any one of claims 1-10.

**Fig. 1**

**Fig. 2**

Fig. 3

400

410

420

430

440

450

**Fig. 4**

500

510

**Fig. 5**

Europäisches
Patentamt

European
Patent Office

Office européen
des brevets

## EUROPEAN SEARCH REPORT

Application Number

EP 23 15 6220

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/404815 A1 (CHUBANOV SERGEI [DE]) 22 December 2022 (2022-12-22) | 1,2,7-15 | INV. G06Q10/0631 |
| Y | * abstract; figures 1-3 * <br> * paragraphs [0007] – [0035] * <br> * paragraphs [0061] – [0077] * <br> * paragraphs [0095], [0103] – [0125] * | 3-6 | G06Q50/04 <br> G06Q10/06 |
| Y | US 2022/226994 A1 (GOMBOLAY MATTHEW C [US] ET AL) 21 July 2022 (2022-07-21) <br> * abstract; figures 1, 4-6 * <br> * paragraphs [0034] – [0067] * <br> * paragraphs [0109], [0110] * | 1-15 | |
| Y | US 2008/005744 A1 (BUCO MELISSA J [US] ET AL) 3 January 2008 (2008-01-03) <br> * abstract; figures 4A-4E * <br> * paragraphs [0047] – [0112] * | 1-15 | |
| Y | US 2022/414817 A1 (ZAD TOOTAGHAJ DIMAN [US] ET AL) 29 December 2022 (2022-12-29) <br> * abstract; figure 1 * <br> * paragraphs [0009], [0016] – [0030] * | 1-15 | |
| Y | WO 2022/231846 A1 (UNIV CHICAGO [US]) 3 November 2022 (2022-11-03) <br> * paragraphs [0019] – [0022] * <br> * paragraphs [0028] – [0057] * <br> * paragraphs [0068] – [0091] * | 1-15 | TECHNICAL FIELDS SEARCHED (IPC) <br><br> G06Q |
| A | WO 2022/211981 A1 (MICROSOFT TECHNOLOGY LICENSING LLC [US]) 6 October 2022 (2022-10-06) <br> * abstract; figures 7-9 * <br> * paragraphs [0027] – [0041] * <br> * paragraphs [0111] – [0113] * | 1-15 | |

-/--

The present search report has been drawn up for all claims

| Place of search | Date of completion of the search | Examiner |
|---|---|---|
| Munich | 25 July 2023 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 414 912 A1**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/266014 A1 (BAHL ROHIT [CA] ET AL) 29 August 2019 (2019-08-29) * abstract; figures 1, 2 * * paragraphs [0010] – [0045] * ----- | 1-15 | |
| A | US 2019/205164 A1 (KUMAR RAJESH [US] ET AL) 4 July 2019 (2019-07-04) * abstract; figure 2 * * paragraphs [0024] – [0086] * ----- | 1-15 | |

TECHNICAL FIELDS SEARCHED (IPC)

The present search report has been drawn up for all claims

| Place of search | Date of completion of the search | Examiner |
|---|---|---|
| Munich | 25 July 2023 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 6220

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2023

| Patent document cited in search report | | Publication date | Patent family member(s) | | Publication date |
|---|---|---|---|---|---|
| US 2022404815 | A1 | 22-12-2022 | CN 115374990 A | | 22-11-2022 |
| | | | EP 4092587 A1 | | 23-11-2022 |
| | | | US 2022404815 A1 | | 22-12-2022 |
| US 2022226994 | A1 | 21-07-2022 | NONE | | |
| US 2008005744 | A1 | 03-01-2008 | US 2005055697 A1 | | 10-03-2005 |
| | | | US 2008005744 A1 | | 03-01-2008 |
| US 2022414817 | A1 | 29-12-2022 | CN 115599512 A | | 13-01-2023 |
| | | | DE 102021127324 A1 | | 29-12-2022 |
| | | | US 2022414817 A1 | | 29-12-2022 |
| WO 2022231846 | A1 | 03-11-2022 | NONE | | |
| WO 2022211981 | A1 | 06-10-2022 | NONE | | |
| US 2019266014 | A1 | 29-08-2019 | NONE | | |
| US 2019205164 | A1 | 04-07-2019 | CA 3086764 A1 | | 11-07-2019 |
| | | | CN 111480145 A | | 31-07-2020 |
| | | | EP 3735635 A1 | | 11-11-2020 |
| | | | US 2019205164 A1 | | 04-07-2019 |
| | | | US 2020012523 A1 | | 09-01-2020 |
| | | | WO 2019135963 A1 | | 11-07-2019 |

EPO FORM P0459

For more details about this annex : see Official Journal of the European Patent Office, No. 12/82